# DEMANDE DE BREVET EUROPEEN

(11) **EP 4 175 116 A1**
(43) Date de publication de la demande: **03.05.2023**
(21) Numéro de dépôt: 22204063.6
(22) Date de dépôt: 27.10.2022
(51) Int. Cl.: H02J 7/00, E06B 9/72, H02J 7/35, E06B 9/68

(54) **DISPOSITIF D'ENTRAÎNEMENT MOTORISÉ, DISPOSITIF D'OCCULTATION ET PROCÉDÉ DE COMMANDE ASSOCIÉS**

(30) Priorité: 28.10.2021 FR 2111472
(71) Demandeur: SOMFY ACTIVITES SA, 74300 Cluses (FR)
(72) Inventeur: TINE, Damien, 74300 Cluses (FR); MARAVAL, Frédéric, 74300 Cluses (FR)
(74) Mandataire: Lavoix

(57) **Abrégé**

Un dispositif d'entraînement motorisé comprend un actionneur électromécanique, une unité électronique de contrôle (15) et un dispositif d'alimentation en énergie électrique (26). Le dispositif d'alimentation en énergie électrique (26) comprend une batterie (24) et un panneau photovoltaïque (25). L'unité électronique de contrôle (15) comprend un premier dispositif de protection (33), configuré pour déconnecter électriquement, de façon sélective, la batterie (24) par rapport au panneau photovoltaïque (25). Le premier dispositif de protection (33) comprend un premier transistor (41), autopiloté et relié électriquement au panneau photovoltaïque (25) et à la batterie (24), et un pont diviseur de tension (44), commandant le premier transistor (41), à partir d'une tension (Vₚᵥ) fournie par le panneau photovoltaïque (25). En outre, le premier dispositif de protection (33) protège au moins une partie de l'unité électronique de contrôle (15) contre une inversion de branchement des polarités de la batterie (24), lors du raccordement électrique de la batterie (24) à l'unité électronique de contrôle (15).

## Description

La présente invention concerne un dispositif d'entraînement motorisé, en particulier pour un dispositif d'occultation, autrement dit un dispositif d'entraînement motorisé d'un dispositif d'occultation, un dispositif d'occultation comprenant un tel dispositif d'entraînement motorisé, ainsi qu'un procédé de commande en fonctionnement d'un tel dispositif d'entraînement motorisé.

De manière générale, la présente invention concerne le domaine des dispositifs d'occultation comprenant un dispositif d'entraînement motorisé mettant en mouvement un écran, entre au moins une première position et au moins une deuxième position.

Un dispositif d'entraînement motorisé comprend un actionneur électromécanique d'un élément mobile de fermeture, d'occultation ou de protection solaire, tel qu'un volet, une porte, une grille, un store ou tout autre matériel équivalent, appelé par la suite écran.

On connaît déjà le document WO 2012 059 673 A2 qui décrit un dispositif d'entraînement motorisé. Le dispositif d'entraînement motorisé comprend un actionneur électromécanique, une unité électronique de contrôle et un dispositif d'alimentation en énergie électrique. L'actionneur électromécanique comprend un moteur électrique. Le dispositif d'alimentation en énergie électrique comprend une batterie et un panneau photovoltaïque. L'unité électronique de contrôle comprend un dispositif de protection. L'unité électronique de contrôle et le moteur électrique sont alimentés en énergie électrique à partir de la batterie. La batterie est alimentée en énergie électrique au moyen du panneau photovoltaïque. Le dispositif de protection est configuré pour déconnecter électriquement la batterie par rapport au panneau photovoltaïque. Le dispositif de protection comprend un transistor. Le transistor est relié électriquement, d'une part, au panneau photovoltaïque et, d'autre part, à la batterie.

Cependant, ce dispositif d'entraînement motorisé présente l'inconvénient que le transistor déconnectant électriquement la batterie par rapport au panneau photovoltaïque est commandé par un microcontrôleur de l'unité électronique de contrôle. Ce dispositif de protection réalisé au moyen du transistor commandé par le microcontrôleur est onéreux.

En outre, ce dispositif d'entraînement motorisé présente l'inconvénient de déconnecter électriquement la batterie par rapport au panneau photovoltaïque, au moyen du transistor, uniquement pour effectuer une mesure du courant de court-circuit du panneau photovoltaïque ou une mesure de la tension à vide du panneau photovoltaïque, de sorte à entraîner en déplacement un écran d'un dispositif d'occultation, en fonction d'un niveau d'ensoleillement.

Par ailleurs, ce dispositif d'entraînement motorisé présente l'inconvénient que, si le panneau photovoltaïque est relié électriquement à l'unité électronique de contrôle avant que la batterie soit reliée électriquement à l'unité électronique de contrôle et que la batterie est reliée électriquement à l'unité électronique de contrôle en inversant les polarités de branchement de la batterie à l'unité électronique de contrôle, alors un endommagement, voire une destruction, d'un composant électronique de l'unité électronique de contrôle peut être engendré.

On connaît également le document US 2014/0145511 A1 qui décrit un dispositif d'entraînement motorisé identique à celui décrit dans le document WO 2012 059 673 A2.

On connaît également le document JP 2000 341848 A qui décrit un circuit pour connecter une alimentation en courant continu à un circuit de charge, de sorte qu'une tension à polarité inverse ne soit pas appliquée au côté du circuit de charge, même si la polarité du côté de l'entrée est connectée par erreur en sens inverse. Cette protection est mise en œuvre en utilisant un transistor interposé entre l'alimentation en courant continu et le circuit de charge. En outre, une tension d'entrée est divisée par des résistances et appliquée entre la grille et la source du transistor.

La présente invention a pour but de résoudre les inconvénients précités et de proposer un dispositif d'entraînement motorisé, un dispositif d'occultation comprenant un tel dispositif d'entraînement motorisé, ainsi qu'un procédé de commande en fonctionnement d'un tel dispositif d'entraînement motorisé, permettant de protéger une unité électronique de contrôle contre une inversion de branchement des polarités d'une batterie, lors du raccordement électrique de la batterie à l'unité électronique de contrôle, tout en minimisant les coûts d'obtention du dispositif d'entraînement motorisé.

A cet égard, la présente invention vise, selon un premier aspect, un dispositif d'entraînement motorisé comprenant au moins :
- un actionneur électromécanique,
- une unité électronique de contrôle, et
- un dispositif d'alimentation en énergie électrique,

l'actionneur électromécanique comprenant au moins un moteur électrique,
le dispositif d'alimentation en énergie électrique comprenant au moins :
   - une batterie, l'unité électronique de contrôle et le moteur électrique étant alimentés en énergie électrique à partir de la batterie, et
   - un panneau photovoltaïque, la batterie étant alimentée en énergie électrique au moyen du panneau photovoltaïque,
l'unité électronique de contrôle comprenant au moins :
   - un premier dispositif de protection, le premier dispositif de protection étant configuré pour déconnecter électriquement, de façon sélective, la batterie par rapport au panneau photovoltaïque, le premier dispositif de protection comprenant un premier transistor, le premier transistor étant relié électriquement, d'une part, au panneau photovoltaïque et, d'autre part, à la batterie.

Selon l'invention, le premier transistor est autopiloté. Le premier dispositif de protection comprend, en outre, un pont diviseur de tension, le premier transistor étant commandé par le pont diviseur de tension, à partir d'une tension fournie par le panneau photovoltaïque. En outre, le premier dispositif de protection protège au moins une partie de l'unité électronique de contrôle contre une inversion de branchement des polarités de la batterie, lors du raccordement électrique de la batterie à l'unité électronique de contrôle.

Ainsi, le premier dispositif de protection permet de protéger au moins une partie de l'unité électronique de contrôle, en particulier un ou plusieurs composants électroniques d'une carte électronique, contre une inversion de branchement des polarités de la batterie, lors du raccordement électrique de la batterie à l'unité électronique de contrôle, tout en minimisant les coûts d'obtention du dispositif d'entraînement motorisé.

Dans le cas où les polarités de branchement de la batterie sont correctement raccordées électriquement à l'unité électronique de contrôle et suite au raccordement électrique du panneau photovoltaïque à la batterie, la tension fournie par le panneau photovoltaïque à la batterie commande le premier transistor, au moyen du pont diviseur de tension, de sorte à recharger la batterie en énergie électrique à partir du panneau photovoltaïque.

De cette manière, lorsque le panneau photovoltaïque fournit la tension destinée à alimenter en énergie électrique la batterie, le premier transistor est autoalimenté en énergie électrique au moyen du pont diviseur de tension.

Par conséquent, lorsque le panneau photovoltaïque fournit la tension destinée à alimenter en énergie électrique la batterie, le premier transistor est dit dans un état « activé », correspondant à un état fermé de celui-ci.

Dans le cas où les polarités de branchement de la batterie sont inversées, suite au raccordement électrique de la batterie à l'unité électronique de contrôle, le premier transistor n'est pas activé par l'intermédiaire du pont diviseur de tension.

De cette manière, au moins une partie de l'unité électronique de contrôle est protégée contre une tension inverse, de sorte à éviter un endommagement, voire une destruction, d'un composant électronique de celle-ci, notamment un composant électronique de la carte électronique, et, plus particulièrement, d'un élément d'un dispositif de mesure de courant, par exemple un amplificateur.

Par conséquent, en cas d'inversion des polarités de branchement de la batterie, lors d'un nouveau raccordement électrique de la batterie à l'unité électronique de contrôle, un changement des polarités de branchement de la batterie permet de mettre correctement en service le dispositif d'entraînement motorisé.

Par ailleurs, le premier transistor n'est pas commandé par le microcontrôleur de l'unité électronique de contrôle.

Par conséquent, le microcontrôleur de l'unité électronique de contrôle ne mesure pas une grandeur électrique ou ne délivre pas un signal de commande pour activer le premier transistor.

Selon une caractéristique avantageuse de l'invention, le dispositif d'alimentation en énergie électrique comprend, en outre, une première diode, la première diode est reliée électriquement, d'une part, au panneau photovoltaïque et, d'autre part, à la batterie. Le pont diviseur de tension est relié électriquement, d'une part, à une liaison électrique entre le panneau photovoltaïque et la batterie et, d'autre part, à une masse, en parallèle au panneau photovoltaïque et à la batterie. En outre, le premier transistor est connecté électriquement à la première diode et à la batterie.

Selon une autre caractéristique avantageuse de l'invention, l'unité électronique de contrôle comprend au moins un microcontrôleur. Le microcontrôleur comprend au moins un port d'entrée. L'unité électronique de contrôle comprend, en outre, un dispositif de mesure.

En outre, le dispositif de mesure comprend au moins :
- une résistance de shunt, la résistance de shunt étant connectée électriquement, d'une part, à la première diode et, d'autre part, au premier transistor, et
- un amplificateur, l'amplificateur étant connecté électriquement, d'une part, aux bornes de la résistance de shunt et, d'autre part, au port d'entrée du microcontrôleur.

Selon une autre caractéristique avantageuse de l'invention, le premier transistor comprend :
- une première broche, la première broche étant reliée électriquement au panneau photovoltaïque,
- une deuxième broche, la deuxième broche étant reliée électriquement à la batterie, et
- une troisième broche, la troisième broche étant reliée électriquement à un point milieu du pont diviseur de tension.

Selon une autre caractéristique avantageuse de l'invention, l'unité électronique de contrôle comprend, en outre :
- une unité de pilotage, et
- un deuxième dispositif de protection.

L'unité de pilotage est reliée électriquement au moteur électrique. En outre, le deuxième dispositif de protection est configuré pour déconnecter électriquement, de façon sélective, la batterie par rapport à l'unité de pilotage.

Selon une autre caractéristique avantageuse de l'invention, le deuxième dispositif de protection comprend un deuxième transistor et un troisième transistor, le deuxième transistor étant relié électriquement au troisième transistor. Le microcontrôleur comprend un port de sortie, le port de sortie du microcontrôleur étant relié électriquement au troisième transistor, le deuxième transistor étant commandé par le microcontrôleur par l'intermédiaire du troisième transistor. En outre, le deuxième transistor protège l'unité de pilotage contre une inversion de branchement des polarités de la batterie, lors du raccordement électrique de la batterie à l'unité électronique de contrôle.

Selon une autre caractéristique avantageuse de l'invention, l'unité électronique de contrôle comprend, en outre :
- une unité d'alimentation en énergie électrique auxiliaire, et
- une deuxième diode, la deuxième diode étant reliée électriquement à l'unité d'alimentation en énergie électrique auxiliaire.

En outre, la deuxième diode protège l'unité d'alimentation en énergie électrique auxiliaire contre une inversion de branchement des polarités de la batterie, lors du raccordement électrique de la batterie à l'unité électronique de contrôle.

La présente invention vise, selon un deuxième aspect, un dispositif d'occultation comprenant au moins :
- un écran, et
- un dispositif d'entraînement motorisé.

Selon l'invention, le dispositif d'entraînement motorisé est conforme à l'invention et tel que mentionné ci-dessus. L'écran est configuré pour être entraîné en déplacement par l'actionneur électromécanique du dispositif d'entraînement motorisé.

Ce dispositif d'occultation présente des caractéristiques et avantages analogues à ceux décrits précédemment en relation avec le dispositif d'entraînement motorisé selon l'invention et tel que mentionné ci-dessus.

Selon une caractéristique avantageuse de l'invention, le dispositif d'occultation comprend, en outre, un tube d'enroulement. L'écran est enroulable sur le tube d'enroulement. En outre, le tube d'enroulement est agencé de sorte à être entraîné en rotation par l'actionneur électromécanique.

La présente invention vise, selon un troisième aspect, un procédé de commande en fonctionnement d'un dispositif d'entraînement motorisé d'un dispositif d'occultation,
- un actionneur électromécanique,
- une unité électronique de contrôle, et
- un dispositif d'alimentation en énergie électrique,

l'actionneur électromécanique comprenant au moins un moteur électrique,
le dispositif d'alimentation en énergie électrique comprenant au moins :
   - une batterie, l'unité électronique de contrôle et le moteur électrique étant alimentés en énergie électrique à partir de la batterie, et
   - un panneau photovoltaïque, la batterie étant alimentée en énergie électrique au moyen du panneau photovoltaïque,
l'unité électronique de contrôle comprenant au moins :
   - un premier dispositif de protection, le premier dispositif de protection étant configuré pour déconnecter électriquement, de façon sélective, la batterie par rapport au panneau photovoltaïque, le premier dispositif de protection comprenant un premier transistor, le premier transistor étant relié électriquement, d'une part, au panneau photovoltaïque et, d'autre part, à la batterie.

Selon l'invention, le premier transistor est autopiloté. Le premier dispositif de protection comprend, en outre, un pont diviseur de tension.

En outre, le procédé comprend au moins les étapes suivantes :
- raccordement électrique de la batterie à l'unité électronique de contrôle,
- raccordement électrique du panneau photovoltaïque à la batterie, et
- commande du premier transistor par le pont diviseur de tension, à partir d'une tension fournie par le panneau photovoltaïque, de sorte à protéger l'unité électronique de contrôle, au moyen du premier dispositif de protection, contre une inversion de branchement des polarités de la batterie, lors de l'étape de raccordement électrique de la batterie à l'unité électronique de contrôle.

Ce procédé de commande présente des caractéristiques et avantages analogues à ceux décrits précédemment en relation avec le dispositif d'entraînement motorisé selon l'invention et tel que mentionné ci-dessus.

D'autres particularités et avantages de l'invention apparaîtront encore dans la description ci-après, faite en référence aux dessins annexés, donnés à titre d'exemples non limitatifs et dans lesquels :
[Fig 1] la figure 1 est une vue schématique en coupe transversale d'une installation conforme à un mode de réalisation de l'invention, l'installation comprenant un dispositif d'occultation conforme à l'invention ;
[Fig 2] la figure 2 est une vue schématique en perspective de l'installation illustrée à la figure 1 ;
[Fig 3] la figure 3 est une vue schématique en coupe axiale et partielle de l'installation illustrée aux figures 1 et 2, montrant un actionneur électromécanique d'un dispositif d'entraînement motorisé du dispositif d'occultation de l'installation ; et
[Fig 4] la figure 4 est une vue schématique illustrant une partie d'un schéma électrique du dispositif d'entraînement motorisé du dispositif d'occultation de l'installation, illustré aux figures 1 à 3.

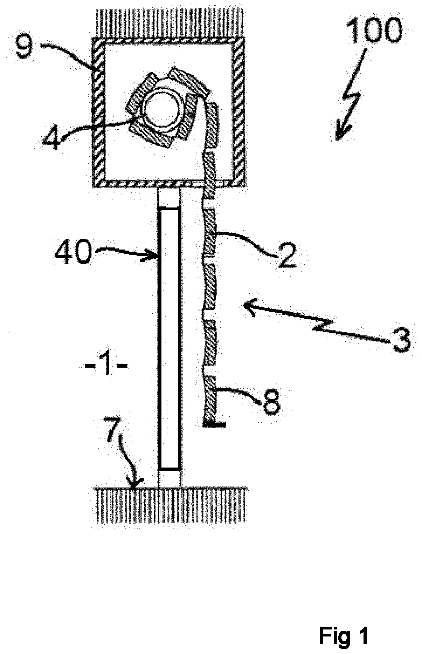

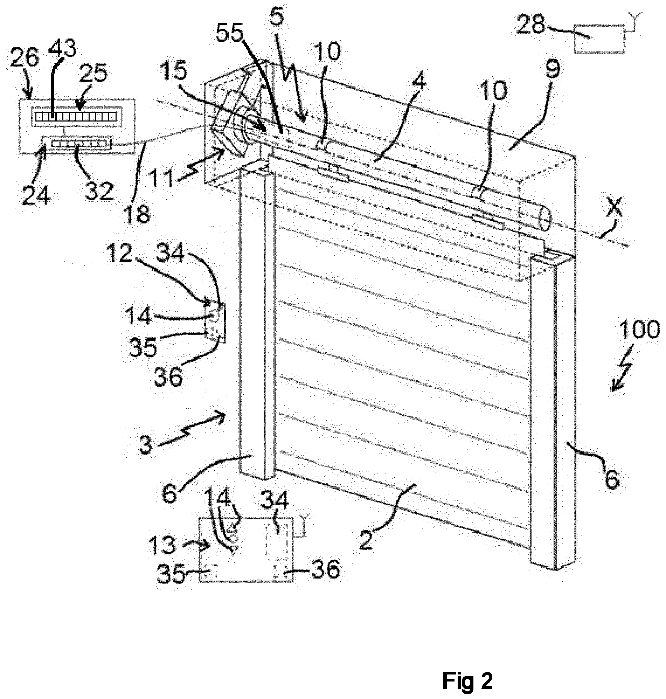

On décrit tout d'abord, en référence aux figures 1 et 2, une installation domotique 100 conforme à l'invention. Cette installation domotique 100 comprend au moins un dispositif de fermeture, d'occultation ou de protection solaire 3, conforme à un mode de réalisation l'invention. Cette installation domotique 100, installée dans un bâtiment, non représenté, comporte une ouverture 1, dans laquelle est disposée une fenêtre 40 ou une porte, qui n'est représentée qu'à la figure 1. Cette installation domotique 100 est équipée d'au moins un écran 2 appartenant au dispositif de fermeture, d'occultation ou de protection solaire 3, en particulier un volet roulant motorisé.

Le dispositif de fermeture, d'occultation ou de protection solaire 3 est par la suite appelé « dispositif d'occultation ». Le dispositif d'occultation 3 comprend l'écran 2.

Le dispositif d'occultation 3 peut être un volet roulant, un store en toile ou avec des lames orientables, un portail roulant, une grille, une porte ou encore un volet battant. La présente invention s'applique à tous les types de dispositif d'occultation.

On décrit, en référence aux figures 1 et 2, un volet roulant conforme au mode de réalisation de l'invention.

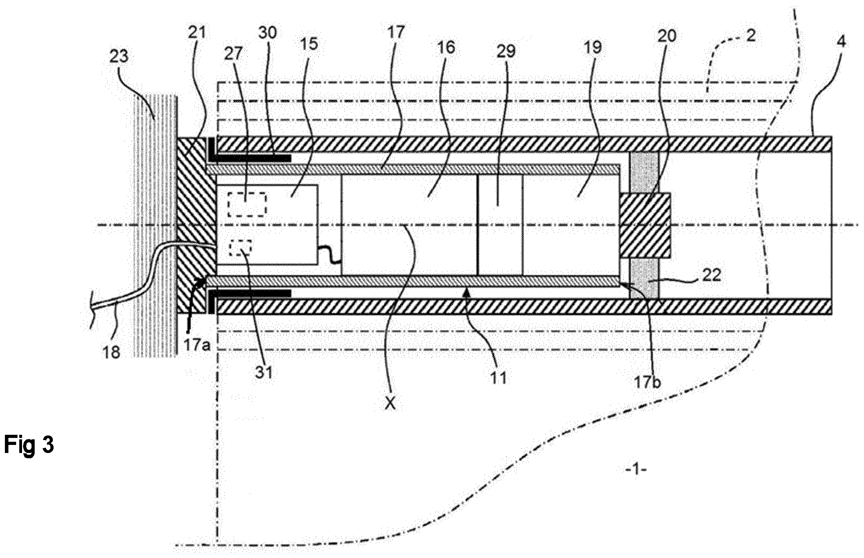

Le dispositif d'occultation 3 comprend un dispositif d'entraînement motorisé 5, conforme à l'invention. Le dispositif d'entraînement motorisé 5 comprend un actionneur électromécanique 11 illustré à la figure 3.

Avantageusement, le dispositif d'occultation 3 comprend, en outre, un tube d'enroulement 4. L'écran 2 est enroulable sur le tube d'enroulement 4. En outre, le tube d'enroulement 4 est agencé de sorte à être entraîné en rotation par l'actionneur électromécanique 11.

Ainsi, l'écran 2 du dispositif d'occultation 3 est enroulé sur le tube d'enroulement 4 ou déroulé autour de celui-ci, le tube d'enroulement 4 étant entraîné par le dispositif d'entraînement motorisé 5, en particulier par l'actionneur électromécanique 11.

De cette manière, l'écran 2 est mobile entre une position enroulée, en particulier haute, et une position déroulée, en particulier basse, et inversement.

L'écran 2 du dispositif d'occultation 3 est un écran de fermeture, d'occultation et/ou de protection solaire, s'enroulant et se déroulant autour du tube d'enroulement 4, dont le diamètre intérieur est supérieur au diamètre externe de l'actionneur électromécanique 11, de sorte que l'actionneur électromécanique 11 peut être inséré dans le tube d'enroulement 4, lors de l'assemblage du dispositif d'occultation 3.

L'actionneur électromécanique 11, en particulier de type tubulaire, permet de mettre en rotation le tube d'enroulement 4 autour d'un axe de rotation X, de sorte à déplacer, en particulier dérouler ou enrouler, l'écran 2 du dispositif d'occultation 3.

Dans un état monté du dispositif d'occultation 3, l'actionneur électromécanique 11 est inséré dans le tube d'enroulement 4.

De manière connue, le volet roulant, qui forme le dispositif d'occultation 3, comporte un tablier comprenant des lames horizontales articulées les unes aux autres, formant l'écran 2 du volet roulant 3, et guidées par deux coulisses latérales 6, représentées uniquement à la figure 2. Ces lames sont jointives lorsque le tablier 2 du volet roulant 3 atteint sa position basse déroulée.

Dans le cas d'un volet roulant, la position haute enroulée correspond à la mise en appui d'une lame d'extrémité finale 8, par exemple en forme de L, du tablier 2 du volet roulant 3 contre un bord d'un coffre 9 du volet roulant 3 ou à l'arrêt de la lame d'extrémité finale 8 dans une position de fin de course haute programmée. En outre, la position basse déroulée correspond à la mise en appui de la lame d'extrémité finale 8 du tablier 2 du volet roulant 3 contre un seuil 7 de l'ouverture 1 ou à l'arrêt de la lame d'extrémité finale 8 dans une position de fin de course basse programmée.

Ici, l'écran 2 est configuré pour être déplacé, au moyen du dispositif d'entraînement motorisé 5, entre une position ouverte, correspondant à la position enroulée et pouvant également être appelée première position de fin de course ou position de fin de course haute FdCH, et une position fermée, correspondant à la position déroulée et pouvant également être appelée deuxième position de fin de course ou position de fin de course basse FdCB.

Ainsi, l'actionneur électromécanique 11 est configuré pour entraîner, autrement dit entraîne, en déplacement l'écran 2, entre la première position de fin de course FdCH et la deuxième position de fin de course FdCB, et inversement.

La première lame du volet roulant 3, opposée à la lame d'extrémité finale 8, est reliée au tube d'enroulement 4 au moyen d'au moins une articulation 10, en particulier une pièce d'attache en forme de bande.

Le tube d'enroulement 4 est disposé à l'intérieur du coffre 9 du volet roulant 3. Le tablier 2 du volet roulant 3 s'enroule et se déroule autour du tube d'enroulement 4 et est logé au moins en partie à l'intérieur du coffre 9.

De manière générale, le coffre 9 est disposé au-dessus de l'ouverture 1, ou encore en partie supérieure de l'ouverture 1.

Avantageusement, le dispositif d'entraînement motorisé 5 est commandé par une unité de commande. L'unité de commande peut être, par exemple, une unité de commande locale 12 ou une unité de commande centrale 13.

Avantageusement, l'unité de commande locale 12 peut être reliée, en liaison filaire ou non filaire, avec l'unité de commande centrale 13.

Avantageusement, l'unité de commande centrale 13 peut piloter l'unité de commande locale 12, ainsi que d'autres unités de commande locales similaires et réparties dans le bâtiment.

Le dispositif d'entraînement motorisé 5 est, de préférence, configuré pour exécuter les commandes de déroulement ou d'enroulement de l'écran 2 du dispositif d'occultation 3, pouvant être émises, notamment, par l'unité de commande locale 12 ou l'unité de commande centrale 13.

L'installation domotique 100 comprend soit l'unité de commande locale 12, soit l'unité de commande centrale 13, soit l'unité de commande locale 12 et l'unité de commande centrale 13.

On décrit à présent, plus en détail et en référence à la figure 3, le dispositif d'entraînement motorisé 5, y compris l'actionneur électromécanique 11, appartenant à l'installation domotique 100 et, plus particulièrement, au dispositif d'occultation 3 illustré aux figures 1 et 2.

L'actionneur électromécanique 11 comprend un moteur électrique 16.

Le moteur électrique 16 est représenté par son enveloppe à la figure 3, sans détails sur ses éléments constitutifs internes.

Avantageusement, le moteur électrique 16 comprend un rotor et un stator, non représentés et positionnés de manière coaxiale autour de l'axe de rotation X, qui est également l'axe de rotation du tube d'enroulement 4 en configuration montée du dispositif d'entraînement motorisé 5.

Ici, le moteur électrique 16 peut être de type sans balais à commutation électronique, appelé également « BLDC » (acronyme du terme anglo-saxon BrushLess Direct Current) ou « synchrone à aimants permanents », ou du type à courant continu.

Des moyens de commande de l'actionneur électromécanique 11, permettant le déplacement de l'écran 2 du dispositif d'occultation 3, comprennent au moins une unité électronique de contrôle 15. Cette unité électronique de contrôle 15 est apte à mettre en fonctionnement le moteur électrique 16 de l'actionneur électromécanique 11 et, en particulier, permettre l'alimentation en énergie électrique du moteur électrique 16.

Ainsi, l'unité électronique de contrôle 15 commande, notamment, le moteur électrique 16, de sorte à ouvrir ou fermer l'écran 2, comme décrit précédemment.

Les moyens de commande de l'actionneur électromécanique 11 comprennent des moyens matériels et/ou logiciels.

A titre d'exemple nullement limitatif, les moyens matériels peuvent comprendre au moins un microcontrôleur 31.

Ici, le dispositif d'entraînement motorisé 5 comprend l'unité électronique de contrôle 15. En outre, l'unité électronique de contrôle 15 comprend le microcontrôleur 31.

Avantageusement, l'unité électronique de contrôle 15 comprend, en outre, un premier module de communication 27, en particulier de réception d'ordres de commande, les ordres de commande étant émis par un émetteur d'ordres, tel que l'unité de commande locale 12 ou l'unité de commande centrale 13, ces ordres étant destinés à commander le dispositif d'entraînement motorisé 5.

Avantageusement, le premier module de communication 27 de l'unité électronique de contrôle 15 est de type sans fil. En particulier, le premier module de communication 27 est configuré pour recevoir des ordres de commande radioélectriques.

Avantageusement, le premier module de communication 27 peut également permettre la réception d'ordres de commande transmis par des moyens filaires.

Avantageusement, l'unité électronique de contrôle 15, l'unité de commande locale 12 et/ou l'unité de commande centrale 13 peuvent être en communication avec une station météorologique, non représentée, disposée à l'intérieur du bâtiment ou déportée à l'extérieur du bâtiment, incluant, notamment, un ou plusieurs capteurs pouvant être configurés pour déterminer, par exemple, une température, une luminosité, ou encore une vitesse de vent, dans le cas où la station météorologique est déportée à l'extérieur du bâtiment.

Avantageusement, l'unité électronique de contrôle 15, l'unité de commande locale 12 et/ou l'unité de commande centrale 13 peuvent également être en communication avec un serveur 28, tel qu'illustré à la figure 2, de sorte à contrôler l'actionneur électromécanique 11 suivant des données mises à disposition à distance par l'intermédiaire d'un réseau de communication, en particulier un réseau internet pouvant être relié au serveur 28.

L'unité électronique de contrôle 15 peut être commandée à partir de l'unité de commande locale 12 et/ou centrale 13. L'unité de commande locale 12 et/ou centrale 13 est pourvue d'un clavier de commande. Le clavier de commande de l'unité de commande locale 12 ou centrale 13 comprend un ou plusieurs éléments de sélection 14 et, éventuellement, un ou plusieurs éléments d'affichage 34.

A titre d'exemples nullement limitatifs, les éléments de sélection peuvent comprendre des boutons poussoirs et/ou des touches sensitives. Les éléments d'affichage peuvent comprendre des diodes électroluminescentes et/ou un afficheur LCD (acronyme du terme anglo-saxon « Liquid Crystal Display ») ou TFT (acronyme du terme anglo-saxon « Thin Film Transistor »). Les éléments de sélection et d'affichage peuvent être également réalisés au moyen d'un écran tactile.

Avantageusement, l'unité de commande locale 12 et/ou centrale 13 comprend au moins un deuxième module de communication 36.

Ainsi, le deuxième module de communication 36 de l'unité de commande locale 12 ou centrale 13 est configuré pour émettre, autrement dit émet, des ordres de commande, en particulier par des moyens sans fil, par exemple radioélectriques, ou par des moyens filaires.

En outre, le deuxième module de communication 36 de l'unité de commande locale 12 ou centrale 13 peut également être configuré pour recevoir, autrement dit reçoit, des ordres de commande, en particulier par l'intermédiaire des mêmes moyens.

Avantageusement, le deuxième module de communication 36 de l'unité de commande locale 12 ou centrale 13 est configuré pour communiquer, autrement dit communique, avec le premier module de communication 27 de l'unité électronique de contrôle 15.

Ainsi, le deuxième module de communication 36 de l'unité de commande locale 12 ou centrale 13 échange des ordres de commande avec le premier module de communication 27 de l'unité électronique de contrôle 15, soit de manière monodirectionnelle, soit de manière bidirectionnelle.

Avantageusement, l'unité de commande locale 12 est un point de commande, pouvant être fixe ou nomade. Un point de commande fixe peut être un boîtier de commande destiné à être fixé sur une façade d'un mur du bâtiment ou sur une face d'un cadre dormant de la fenêtre 40 ou d'une porte. Un point de commande nomade peut être une télécommande, un téléphone intelligent ou une tablette.

Avantageusement, l'unité de commande locale 12 et/ou centrale 13 comprend, en outre, un contrôleur 35.

Le dispositif d'entraînement motorisé 5, en particulier l'unité électronique de contrôle 15, est, de préférence, configuré pour exécuter des ordres de commande de déplacement, notamment de fermeture ainsi que d'ouverture, de l'écran 2 du dispositif d'occultation 3. Ces ordres de commande peuvent être émis, notamment, par l'unité de commande locale 12 ou par l'unité de commande centrale 13.

Le dispositif d'entraînement motorisé 5 peut être contrôlé par l'utilisateur, par exemple par la réception d'un ordre de commande correspondant à un appui sur le ou l'un des éléments de sélection 14 de l'unité de commande locale 12 ou centrale 13.

Le dispositif d'entraînement motorisé 5 peut également être contrôlé automatiquement, par exemple par la réception d'un ordre de commande correspondant à au moins un signal provenant d'au moins un capteur, non représenté, et/ou à un signal provenant d'une horloge, non représentée, de l'unité électronique de contrôle 15, en particulier du microcontrôleur 31. Le capteur et/ou l'horloge peuvent être intégrés à l'unité de commande locale 12 ou à l'unité de commande centrale 13.

Avantageusement, l'actionneur électromécanique 11 comprend, en outre, un carter 17, en particulier tubulaire. Le moteur électrique 16 est monté à l'intérieur du carter 17, en particulier dans une configuration assemblée de l'actionneur électromécanique 11.

Ici, le carter 17 de l'actionneur électromécanique 11 est de forme cylindrique, notamment de révolution autour de l'axe de rotation X.

Avantageusement, le carter 17 est un tube.

Ici, le tube formant le carter 17 présente une section circulaire.

Dans un exemple de réalisation, le carter 17 est réalisé dans un matériau métallique.

La matière du carter de l'actionneur électromécanique n'est pas limitative et peut être différente. Il peut s'agir, en particulier, d'une matière plastique.

Le carter 17 est creux. Le carter 17 comprend une première extrémité 17a et une deuxième extrémité 17b. La deuxième extrémité 17b est opposée à la première extrémité 17a. Le carter 17 est ouvert à chacune de ses extrémités 17a, 17b.

Avantageusement, l'actionneur électromécanique 11 comprend, en outre, un arbre de sortie 20.

L'arbre de sortie 20 est disposé, autrement dit est configuré pour être disposé, au niveau de la deuxième extrémité 17b du carter 17, en particulier dans la configuration assemblée de l'actionneur électromécanique 11.

Avantageusement, l'actionneur électromécanique 11 comprend, en outre, un réducteur 19.

Le réducteur 19 est représenté par son enveloppe à la figure 3, sans détails sur ses éléments constitutifs internes.

Avantageusement, le réducteur 19 comprend au moins un étage de réduction. L'étage de réduction peut être un train d'engrenages de type épicycloïdal.

Le type et le nombre d'étages de réduction du réducteur ne sont pas limitatifs.

Le réducteur 19 est accouplé, autrement dit est configuré pour être accouplé, avec le moteur électrique 16, en particulier avec le rotor du moteur électrique 16 et dans la configuration assemblée de l'actionneur électromécanique 11.

Avantageusement, l'actionneur électromécanique 11 comprend, en outre, un frein 29.

A titre d'exemples nullement limitatifs, le frein 29 peut être un frein à ressort, un frein à came, un frein magnétique ou un frein électromagnétique.

Ici et comme visible à la figure 3, en particulier dans la configuration assemblée de l'actionneur électromécanique 11, le frein 29 est configuré pour être disposé, autrement dit est disposé, entre le moteur électrique 16 et le réducteur 19, c'est-à-dire à la sortie du moteur électrique 16.

En variante, non représentée, en particulier dans la configuration assemblée de l'actionneur électromécanique 11, le frein 29 est configuré pour être disposé, autrement dit est disposé, entre l'unité électronique de contrôle 15 et le moteur électrique 16, autrement dit à l'entrée du moteur électrique 16, entre le réducteur 19 et l'arbre de sortie 20, autrement dit à la sortie du réducteur 19, ou entre deux étages de réduction du réducteur 19.

Avantageusement, le réducteur 19 et, éventuellement, le frein 29 sont disposés à l'intérieur du carter 17 de l'actionneur électromécanique 11, en particulier dans la configuration assemblée de l'actionneur électromécanique 11.

Avantageusement, l'actionneur électromécanique 11 comprend, en outre, une couronne 30. La couronne 30 est disposée, autrement dit est configurée pour être disposée, au niveau de la première extrémité 17a du carter 17, en particulier dans la configuration assemblée de l'actionneur électromécanique 11.

La couronne 30 constitue, autrement dit est configurée pour constituer, un palier de guidage en rotation du tube d'enroulement 4, en particulier dans une configuration assemblée du dispositif d'occultation 3.

Avantageusement, l'actionneur électromécanique 11 et, plus particulièrement, l'unité électronique de contrôle 15 comprend, en outre, un dispositif de détection d'obstacle et de fins de course, non représenté, lors de l'enroulement de l'écran 2 et lors du déroulement de cet écran 2, pouvant être mécanique ou électronique.

Avantageusement, le dispositif de détection d'obstacle et de fins de course est mis en œuvre au moyen du microcontrôleur 31 de l'unité électronique de contrôle 15 et, en particulier, au moyen d'un algorithme mis en œuvre par ce microcontrôleur 31.

Le tube d'enroulement 4 est entraîné en rotation autour de l'axe de rotation X et du carter 17 de l'actionneur électromécanique 11 en étant soutenu par l'intermédiaire de deux liaisons pivot. La première liaison pivot est réalisée au niveau d'une première extrémité du tube d'enroulement 4 au moyen de la couronne 30 insérée autour de la première extrémité 17a du carter 17 de l'actionneur électromécanique 11. La couronne 30 permet ainsi de réaliser un palier. La deuxième liaison pivot, non représentée à la figure 3, est réalisée au niveau d'une deuxième extrémité du tube d'enroulement 4, non visible sur cette figure.

Avantageusement, l'actionneur électromécanique 11 comprend, en outre, un support de couple 21, pouvant également être appelé « tête d'actionneur » ou « point fixe ».

Le support de couple 21 obture, autrement dit est configuré pour obturer, la première extrémité 17a du carter 17, en particulier dans la configuration assemblée de l'actionneur électromécanique 11.

Ainsi, le support de couple 21 est disposé, autrement dit est configuré pour être disposé, au niveau de la première extrémité 17a du carter 17.

Avantageusement, le support de couple 21 est en saillie, au niveau de la première extrémité 17a du carter 17, en particulier l'extrémité 17a du carter 17 recevant la couronne 30.

Ainsi, une première partie du support de couple 21 est disposée à l'intérieur du carter 17 et une deuxième partie du support de couple 21 est disposée à l'extérieur du carter 17.

Avantageusement, le support de couple 21 de l'actionneur électromécanique 11 est configuré pour fixer l'actionneur électromécanique 11 sur un bâti 23, en particulier à une joue du coffre 9.

Ainsi, le support de couple 21 permet de reprendre les efforts exercés par l'actionneur électromécanique 11, en particulier le couple exercé par l'actionneur électromécanique 11, par rapport à la structure du bâtiment. Le support de couple 21 permet avantageusement de reprendre, en outre, des efforts exercés par le tube d'enroulement 4, notamment le poids du tube d'enroulement 4, de l'actionneur électromécanique 11 et de l'écran 2, et d'assurer la reprise de ces efforts par la structure du bâtiment.

Le support de couple 21 est fixé, autrement dit est configuré pour être fixé, au carter 17 au moyen d'un ou plusieurs éléments de fixation, en particulier dans la configuration assemblée de l'actionneur électromécanique 11. Le ou les éléments de fixation peuvent être, notamment, des bossages, des vis de fixation, des éléments de fixation par encliquetage élastique, des nervures emmanchées dans des échancrures ou une combinaison de ces différents éléments de fixation.

Par ailleurs, le support de couple 21 de l'actionneur électromécanique 11 peut permettre de supporter au moins une partie de l'unité électronique de contrôle 15.

Avantageusement, l'unité électronique de contrôle 15 peut être alimentée en énergie électrique au moyen d'un câble d'alimentation électrique 18.

Ici et tel qu'illustré à la figure 3, l'unité électronique de contrôle 15 est ainsi disposée, autrement dit est intégrée, à l'intérieur du carter 17 de l'actionneur électromécanique 11.

En variante, non représentée, l'unité électronique de contrôle 15 est disposée à l'extérieur du carter 17 de l'actionneur électromécanique 11 et, en particulier, montée sur le coffre 9 ou dans le support de couple 21.

Avantageusement, le support de couple 21 peut comprendre au moins un bouton, non représenté.

Ce ou ces boutons peuvent permettre de réaliser un réglage de l'actionneur électromécanique 11 au travers d'un ou plusieurs modes de configuration, d'appairer avec l'actionneur électromécanique 11 une ou plusieurs unités de commande 12, 13, de réinitialiser un ou plusieurs paramètres, pouvant être, par exemple, une position de fin de course, de réinitialiser la ou les unités de commande 12, 13 appairées ou encore de commander le déplacement de l'écran 2.

Avantageusement, le support de couple 21 peut comprendre au moins un dispositif d'affichage, non représenté, de sorte à permettre une indication visuelle d'un paramètre de fonctionnement du dispositif d'entraînement motorisé 5.

Avantageusement, le dispositif d'affichage comprend au moins une source d'éclairage, non représentée, en particulier une diode électroluminescente.

Cette ou ces sources d'éclairage sont montées sur une carte électronique de l'unité électronique de contrôle 15 et, éventuellement, un capot transparent ou translucide et/ou un guide de lumière est ou sont prévus, pour permettre le passage de la lumière émise par la ou chacune des sources d'éclairage.

Avantageusement, l'arbre de sortie 20 de l'actionneur électromécanique 11 est disposé à l'intérieur du tube d'enroulement 4 et au moins en partie à l'extérieur du carter 17 de l'actionneur électromécanique 11.

Ici, une extrémité de l'arbre de sortie 20 est en saillie par rapport au carter 17 de l'actionneur électromécanique 11, en particulier par rapport à la deuxième extrémité 17b du carter 17 opposée à la première extrémité 17a.

Avantageusement, l'arbre de sortie 20 de l'actionneur électromécanique 11 est configuré pour entraîner en rotation un élément de liaison 22. Cet élément de liaison 22 est relié au tube d'enroulement 4, en particulier dans la configuration assemblée du dispositif d'occultation 3. L'élément de liaison est, dans l'exemple des figures, réalisé sous la forme d'une roue.

Lors de la mise en fonctionnement de l'actionneur électromécanique 11, le moteur électrique 16 et le réducteur 19 entraînent en rotation l'arbre de sortie 20. En outre, l'arbre de sortie 20 de l'actionneur électromécanique 11 entraîne en rotation le tube d'enroulement 4 par l'intermédiaire de l'élément de liaison 22.

Ainsi, le tube d'enroulement 4 entraîne en rotation l'écran 2 du dispositif d'occultation 3, de sorte à ouvrir ou fermer l'ouverture 1.

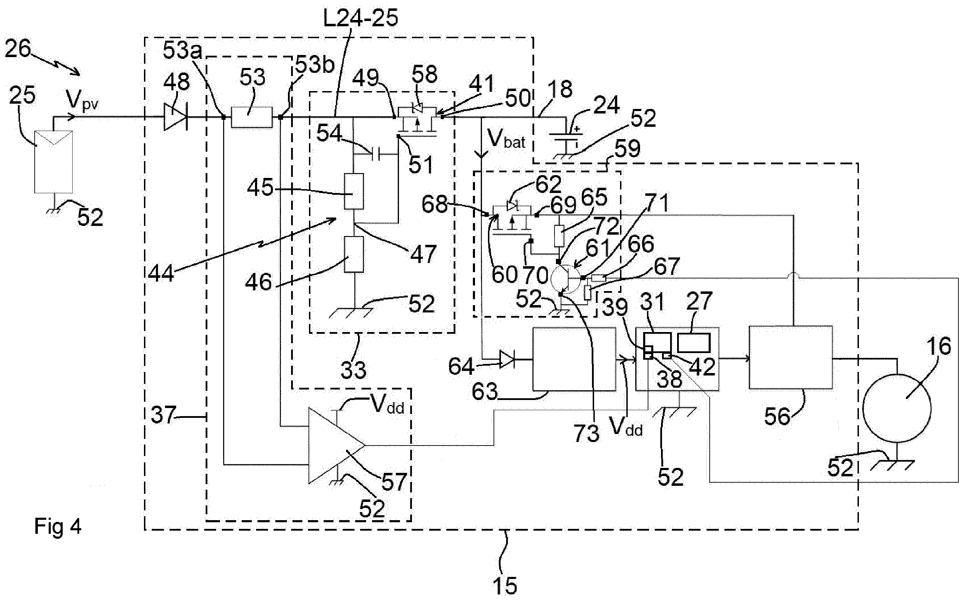

Le dispositif d'occultation 3 et, plus particulièrement, le dispositif d'entraînement motorisé 5 comprend, en outre, un dispositif d'alimentation en énergie électrique 26, visible à la figure 2 et dont un schéma électrique est représenté à la figure 4. L'actionneur électromécanique 11 est relié électriquement au dispositif d'alimentation en énergie électrique 26.

Le dispositif d'alimentation en énergie électrique 26 comprend au moins une batterie 24 et au moins un panneau photovoltaïque 25.

Le dispositif d'alimentation en énergie électrique 26 est configuré pour alimenter, autrement dit alimente, en énergie électrique l'actionneur électromécanique 11 et, plus particulièrement, l'unité électronique de contrôle 15 et le moteur électrique 16.

Ainsi, le dispositif d'alimentation en énergie électrique 26 permet d'alimenter en énergie électrique l'actionneur électromécanique 11, sans être lui-même relié électriquement à un réseau d'alimentation électrique du secteur.

Ici, le panneau photovoltaïque 25 est relié électriquement à la batterie 24, par une liaison électrique L24-25.

L'actionneur électromécanique 11 est relié électriquement au dispositif d'alimentation en énergie électrique 26 et, plus particulièrement, à la batterie 24, en particulier au moyen du câble d'alimentation électrique 18.

La batterie 24 est configurée pour alimenter, autrement dit alimente, en énergie électrique l'actionneur électromécanique 11, en particulier l'unité électronique de contrôle 15 et le moteur électrique 16. En outre, la batterie 24 est configurée pour être alimentée, autrement dit est alimentée, en énergie électrique par le panneau photovoltaïque 25.

Ainsi, le rechargement de la batterie 24 est mis en œuvre par énergie solaire, au moyen du panneau photovoltaïque 25.

Avantageusement, la batterie 24 peut être disposée au niveau du coffre 9 du dispositif d'occultation 3.

Ici et comme illustré à la figure 2, la batterie 24 est disposée à l'extérieur du coffre 9.

En variante, non représentée, la batterie 24 peut être disposée à l'intérieur du coffre 9, à l'intérieur du tube d'enroulement 4 tout en étant à l'extérieur du carter 17, ou à l'intérieur du carter 17, en particulier dans la configuration assemblée de l'actionneur électromécanique 11. Dans ce dernier cas, l'actionneur électromécanique 11 comprend la batterie 24.

Lorsque le support de couple 21 comprend un dispositif d'affichage, le paramètre de fonctionnement que ce dispositif d'affichage permet de visualiser est avantageusement un état de charge de la batterie 24.

Ici, l'actionneur électromécanique 11 comprend le câble d'alimentation électrique 18 permettant son alimentation en énergie électrique, notamment l'alimentation électrique de l'unité électronique de contrôle 15 et l'alimentation électrique du moteur électrique 16, en particulier à partir de la batterie 24.

Ici, la batterie 24 est reliée électriquement directement à l'unité électronique de contrôle 15, par le câble d'alimentation électrique 18.

La batterie 24 est de type rechargeable.

Avantageusement, la batterie 24 comprend une pluralité d'éléments de stockage d'énergie 32, en particulier reliés électriquement en série. Les éléments de stockage d'énergie 32 de la batterie 24 peuvent être, notamment, des piles, autrement dit des accumulateurs.

Avantageusement, le panneau photovoltaïque 25 comprend une pluralité de cellules photovoltaïques 43. Dans ce cas, la batterie 24 est alimentée en énergie électrique au moyen des cellules photovoltaïques 43 du panneau photovoltaïque 25.

Le dispositif d'entraînement motorisé 5, en particulier le panneau photovoltaïque 25 et/ou l'unité électronique de contrôle 15, comprend des éléments de chargement configurés pour charger la batterie 24, à partir de l'énergie solaire récupérée par le panneau photovoltaïque 25. Dans ce cas, le courant circule entre les composants 15, 24 et 25 à travers une liaison filaire, pouvant être distincte du câble d'alimentation en énergie électrique 18.

Ainsi, les éléments de chargement configurés pour charger la batterie 24, à partir de l'énergie solaire, permettent de convertir l'énergie solaire récupérée par le panneau photovoltaïque 25 en énergie électrique.

En variante, en complément, le dispositif d'entraînement motorisé 5, en particulier l'actionneur électromécanique 11, est alimenté en énergie électrique à partir de la batterie 24, à partir d'une batterie auxiliaire, non représentée, ou à partir d'un réseau d'alimentation électrique du secteur, en particulier par le réseau alternatif commercial, notamment en fonction d'un état de charge de la batterie 24.

Ici, l'unité électronique de contrôle 15 comprend une seule carte électronique 55. En outre, la carte électronique 55 est configurée pour contrôler le moteur électrique 16, pour permettre la recharge de la batterie 24 et, éventuellement, accéder à des fonctions de paramétrage et/ou de configuration de l'actionneur électromécanique 11, au moyen d'éléments de sélection et, éventuellement, d'affichage, non représentés. Comme mentionné ci-dessus, les éléments de chargement de la batterie 24 peuvent être disposés au niveau de la carte électronique 55.

En variante, non représentée, l'unité électronique de contrôle 15 comprend une première carte électronique et une deuxième carte électronique. La première carte électronique est configurée pour contrôler, autrement dit contrôle, le moteur électrique 16. En outre, la deuxième carte électronique est configurée pour permettre la recharge de la batterie 24 et, éventuellement, accéder à des fonctions de paramétrage et/ou de configuration de l'actionneur électromécanique 11, au moyen d'éléments de sélection et, éventuellement, d'affichage, non représentés. Les éléments de chargement de la batterie 24 peuvent être disposés au niveau de la deuxième carte électronique.

Dans le cas où l'unité électronique de contrôle 15 comprend une première carte électronique et une deuxième carte électronique, non représentées, la première carte électronique de l'unité électronique de contrôle 15 peut être disposée à l'intérieur du carter 17 de l'actionneur électromécanique 11. En outre, la deuxième carte électronique peut être disposée à l'intérieur du support de couple 21 de l'actionneur électromécanique 11. Par ailleurs, le support de couple 21 peut comprendre un couvercle, non représenté. En outre, la deuxième carte électronique peut être disposée à l'intérieur d'un logement formé entre une partie du support de couple 21 et le couvercle.

Avantageusement, le panneau photovoltaïque 25 peut être fixé sur le coffre 9, sur un mur du bâtiment, sur l'une des coulisses latérales 6, sur une vitre de la fenêtre 40 ou sur un cadre dormant de la fenêtre 40.

On décrit à présent, en référence à la figure 4, une partie d'un schéma électrique du dispositif d'entraînement motorisé 5 illustré aux figures 1 à 3, conforme à un mode de réalisation de l'invention.

La figure 4 étant une vue schématique, l'échelle des composants qui y sont représentés n'est pas respectée.

Le panneau photovoltaïque 25 fournit, autrement dit est configuré pour fournir ou délivrer, une tension Vₚᵥ.

La batterie 24 fournit, autrement dit est configuré pour fournir ou délivrer, une tension V_{bat}.

L'unité électronique de contrôle 15 comprend, en outre, un premier dispositif de protection 33. Le premier dispositif de protection 33 est configuré pour déconnecter électriquement, autrement dit déconnecte électriquement, de façon sélective, la batterie 24 par rapport au panneau photovoltaïque 25.

Dans la présente description, l'expression « de façon sélective », autrement dit « par commutation », signifie que la déconnexion électrique opérée est effective ou non, en fonction de l'état d'un organe du premier dispositif de protection 33 qui opère cette déconnexion électrique.

Le premier dispositif de protection 33 comprend un premier transistor 41. Le premier transistor 41 est relié électriquement, d'une part, au panneau photovoltaïque 25 et, d'autre part, à la batterie 24.

Avantageusement, le premier transistor 41 fait partie intégrante de la liaison électrique L24-25 entre le panneau photovoltaïque 25 et la batterie 24.

Le premier transistor 41 est autopiloté.

Le premier dispositif de protection 33 comprend, en outre, un pont diviseur de tension 44. Le premier transistor 41 est commandé par le pont diviseur de tension 44, à partir de la tension Vₚᵥ fournie par le panneau photovoltaïque 25.

En outre, le premier dispositif de protection 33 protège, autrement dit est configuré pour protéger, au moins une partie de l'unité électronique de contrôle 15 contre une inversion de branchement des polarités de la batterie 24, lors du raccordement électrique de la batterie 24 à l'unité électronique de contrôle 15.

Ici, une « inversion » de branchement des polarités de la batterie 24 consiste à relier électriquement en sens opposé les polarités de la batterie 24, représentées à la figure 4 par les signes « + » et « - », avec l'unité électronique de contrôle 15, par rapport à une configuration normale de raccordement électrique entre la batterie 24 et l'unité électronique de contrôle 15, autrement dit à changer le sens du courant circulant à partir de la batterie 24 vers l'unité électronique de contrôle 15.

Ainsi, le premier dispositif de protection 33 permet de protéger au moins une partie de l'unité électronique de contrôle 15, en particulier un ou plusieurs composants électroniques de la carte électronique 55, contre une inversion de branchement des polarités de la batterie 24, lors du raccordement électrique de la batterie 24 à l'unité électronique de contrôle 15, tout en minimisant les coûts d'obtention du dispositif d'entraînement motorisé 5.

Dans le cas où les polarités de branchement de la batterie 24 sont correctement raccordées électriquement à l'unité électronique de contrôle 15 et suite au raccordement électrique du panneau photovoltaïque 25 à la batterie 24, la tension Vₚᵥ fournie par le panneau photovoltaïque 25 à la batterie 24 commande le premier transistor 41, au moyen du pont diviseur de tension 44, de sorte à recharger la batterie 24 en énergie électrique à partir du panneau photovoltaïque 25.

De cette manière, lorsque le panneau photovoltaïque 25 fournit la tension Vₚᵥ destinée à alimenter en énergie électrique la batterie 24, le premier transistor 41 est autoalimenté en énergie électrique au moyen du pont diviseur de tension 44.

Par conséquent, lorsque le panneau photovoltaïque 25 fournit la tension Vₚᵥ destinée à alimenter en énergie électrique la batterie 24, le premier transistor 41 est dit dans un état « activé », correspondant à un état fermé de celui-ci.

Dans le cas où les polarités de branchement de la batterie 24 sont inversées, suite au raccordement électrique de la batterie 24 à l'unité électronique de contrôle 15, le premier transistor 41 n'est pas activé par l'intermédiaire du pont diviseur de tension 44.

De cette manière, au moins une partie de l'unité électronique de contrôle 15 est protégée contre une tension inverse, de sorte à éviter un endommagement, voire une destruction, d'un composant électronique de celle-ci, notamment un composant électronique de la carte électronique 55.

Par conséquent, en cas d'inversion des polarités de branchement de la batterie, lors d'un nouveau raccordement électrique de la batterie 24 à l'unité électronique de contrôle 15, un changement des polarités de branchement de la batterie 24 permet de mettre correctement en service le dispositif d'entraînement motorisé 5.

Par ailleurs, le premier transistor 41 n'est pas commandé par le microcontrôleur 31 de l'unité électronique de contrôle 15.

Par conséquent, le microcontrôleur 31 de l'unité électronique de contrôle 15 ne mesure pas une grandeur électrique ou ne délivre pas un signal de commande pour activer le premier transistor 41.

Tant que le panneau photovoltaïque 25 n'est pas raccordé électriquement à la batterie 24, la protection par le premier transistor 41, n'est pas fonctionnelle, autrement dit n'est pas active.

De cette manière, tant que le panneau photovoltaïque 25 n'est pas raccordé électriquement à la batterie 24, le premier dispositif de protection 33 permet uniquement de contrôler si les polarités de branchement de la batterie 24 sont inversées, en particulier par un test, suite au raccordement électrique de la batterie 24 à l'unité électronique de contrôle 15.

Dans le cas où les polarités de branchement de la batterie 24 sont correctement raccordées électriquement à l'unité électronique de contrôle 15, des réglages du dispositif d'entraînement motorisé 5 et, plus particulièrement, de l'actionneur électromécanique 11 peuvent être mis en oeuvre, notamment au moyen d'un outil de configuration ou de l'une des unités de commande locale 12 ou centrale 13.

Suite aux réglages mis en oeuvre, le panneau photovoltaïque 25 est relié électriquement à la batterie 24.

Dans le cas où les polarités de branchement de la batterie 24 sont inversées, suite au raccordement électrique de la batterie 24 à l'unité électronique de contrôle 15, des réglages du dispositif d'entraînement motorisé 5 et, plus particulièrement, de l'actionneur électromécanique 11 sont empêchés, puisque l'unité électronique de contrôle 15 et le moteur électrique 16 ne sont pas alimentés en énergie électrique.

Ici, le premier transistor 41 est un transistor à effet de champ, en particulier de type MOSFET (acronyme de l'expression anglo-saxonne « Metal Oxyde Semiconductor Field Effect Transistor »).

En variante, non représentée, le premier transistor 41 peut être un transistor de type IGBT (acronyme de l'expression anglo-saxonne « Insulated Gâte Bipolar Transistor »).

Ici, le pont diviseur de tension 44 est relié électriquement, d'une part, à la liaison électrique L24-25 entre le panneau photovoltaïque 25 et la batterie 24 et, d'autre part, à une masse 52, en parallèle au panneau photovoltaïque 25 et à la batterie 24.

Ici, le pont diviseur de tension 44 comprend une première résistance 45 et une deuxième résistance 46. La première résistance 45 est reliée électriquement à la deuxième résistance 46. Le pont diviseur de tension 44 comprend un point milieu 47. Le point milieu 47 est situé entre la première résistance 45 et la deuxième résistance 46.

Ainsi, les première et deuxième résistances 45, 46 du pont diviseur de tension 44 permettent de basculer le premier transistor 41 d'un état ouvert à un état fermé, et inversement.

Avantageusement, le pont diviseur de tension 44 est configuré pour basculer, autrement dit bascule, le premier transistor 41 de l'état ouvert à l'état fermé lorsque la valeur de la tension Vₚᵥ fournie par le panneau photovoltaïque 25 est supérieure ou égale à une valeur seuil prédéterminée Vₛₑᵤᵢₗ de tension.

A titre d'exemple nullement limitatif, la valeur seuil prédéterminée Vₛₑᵤᵢₗ est comprise entre 3 et 5 volts.

Ainsi, le pont diviseur de tension 44 est configuré pour basculer, autrement dit bascule, le premier transistor 41 de l'état ouvert à l'état fermé, même lorsque l'ensoleillement du panneau photovoltaïque 25 est faible, par exemple supérieur ou égal à une valeur d'ensoleillement minimale, pouvant être, par exemple, de 5 watts par mètre carré.

Ici, la batterie 24 est reliée électriquement à l'unité électronique de contrôle 15 puis la batterie 24 est reliée électriquement au panneau photovoltaïque 25, par l'intermédiaire du premier dispositif de protection 33.

Avantageusement, le dispositif d'alimentation en énergie électrique 26 et, plus particulièrement, l'unité électronique de contrôle 15 comprend, en outre, une première diode 48. La première diode 48 est reliée électriquement, d'une part, au panneau photovoltaïque 25 et, d'autre part, à la batterie 24.

Avantageusement, la première diode 48 fait partie intégrante de la liaison électrique L24-25 entre le panneau photovoltaïque 25 et la batterie 24.

Ici, la première diode 48 est disposée entre le panneau photovoltaïque 25 et la batterie 24. La première diode 48 est dite « passante » du panneau photovoltaïque 25 vers la batterie 24 et dite « bloquante » de la batterie 24 vers le panneau photovoltaïque 25.

Ici, la première diode 48 permet, notamment, d'éviter un retour d'énergie électrique de la batterie 24 vers le panneau photovoltaïque 25, lorsque la valeur de la tension Vₚᵥ fournie par le panneau photovoltaïque 25 est inférieure à une valeur de la tension V_{bat} fournie par la batterie 24.

En outre, la première diode 48 permet de protéger le dispositif d'alimentation en énergie électrique 26, ainsi que l'unité électronique de contrôle 15, par rapport à une inversion du sens de câblage de la batterie 24 ou du panneau photovoltaïque 25.

Avantageusement, le premier transistor 41 est connecté électriquement à la première diode 48 et à la batterie 24.

Ici, le premier transistor 41 est disposé entre le panneau photovoltaïque 25 et la batterie 24 et, plus particulièrement, entre la première diode 48 et la batterie 24. En outre, le premier transistor 41 est disposé entre une partie de l'unité électronique de contrôle 15 et le panneau photovoltaïque 25 et, plus particulièrement, entre une partie de l'unité électronique de contrôle 15 et la première diode 48.

Avantageusement, le microcontrôleur 31 comprend au moins un port d'entrée 38.

Avantageusement, l'unité électronique de contrôle 15 comprend, en outre, un dispositif de mesure 37. Le dispositif de mesure 37 comprend au moins une résistance de shunt 53 et un amplificateur 57. La résistance de shunt 53 est connectée électriquement, d'une part, à la première diode 48 et, d'autre part, au premier transistor 41. L'amplificateur 57 est connecté électriquement, d'une part, aux bornes 53a, 53b de la résistance de shunt 53 et, d'autre part, au port d'entrée 38 du microcontrôleur 31.

Ainsi, dans le cas où les polarités de branchement de la batterie 24 sont inversées, suite au raccordement électrique de la batterie 24 à l'unité électronique de contrôle 15, l'unité électronique de contrôle 15 est protégée contre une tension inverse, au moyen du premier transistor 41, de sorte à éviter un endommagement, voire une destruction, d'un élément du dispositif de mesure 37, en particulier de l'amplificateur 57.

De cette manière, le premier transistor 41 est configuré pour protéger, autrement dit protège, le dispositif de mesure 37 et, plus particulièrement, l'amplificateur 57 contre une inversion de branchement des polarités de la batterie 24, lors du raccordement électrique de la batterie 24 à l'unité électronique de contrôle 15.

Par conséquent, le premier dispositif de protection 33 permet de protéger l'unité électronique de contrôle 15, en particulier le dispositif de mesure 37 et, plus particulièrement, l'amplificateur 57, contre une inversion de branchement des polarités de la batterie 24, lors du raccordement électrique de la batterie 24 à l'unité électronique de contrôle 15.

Avantageusement, la résistance de shunt 53 fait partie intégrante de la liaison électrique L24-25 entre le panneau photovoltaïque 25 et la batterie 24.

Avantageusement, le dispositif de mesure 37 est un dispositif de mesure de courant.

Avantageusement, le port d'entrée 38 du microcontrôleur 31 comprend un convertisseur analogique/numérique 39. Dans ce cas, le convertisseur analogique/numérique 39 est intégré au microcontrôleur 31.

En variante, non représentée, le port d'entrée 38 du microcontrôleur 31 est relié électriquement à un convertisseur analogique/numérique. Dans ce cas, le convertisseur analogique/numérique est un élément distinct du microcontrôleur 31.

Avantageusement, le premier transistor 41 comprend une première diode inverse 58.

Ainsi, la première diode inverse 58 du premier transistor 41 est mise en court-circuit par une fermeture du premier transistor 41 et la batterie 24 est alimentée en énergie électrique à partir du panneau photovoltaïque 25 à travers le premier transistor 41.

De cette manière, la première diode inverse 58 du premier transistor 41 permet de protéger le dispositif de mesure 37 et, plus particulièrement, l'amplificateur 57 contre une inversion de branchement des polarités de la batterie 24, lors du raccordement électrique de la batterie 24 à l'unité électronique de contrôle 15.

Ici, la première diode inverse 58 est intégrée au premier transistor 41.

Avantageusement, le premier transistor 41 comprend :
- une première broche 49, pouvant également être appelée « source », la première broche 49 étant reliée électriquement au panneau photovoltaïque 25,
- une deuxième broche 50, pouvant également être appelée « drain », la deuxième broche 50 étant reliée électriquement à la batterie 24, et
- une troisième broche 51, pouvant également être appelée « grille », la troisième broche 51 étant reliée électriquement au point milieu 47 du pont diviseur de tension 44.

Ainsi, la troisième broche 51 du premier transistor 41 est alimentée en énergie électrique dès qu'une tension positive est présente dans le pont diviseur de tension 44. L'alimentation en énergie électrique de la troisième broche 41 du premier transistor 41 engendre une fermeture du premier transistor 41.

De cette manière, la batterie 24 est alimentée en énergie électrique à partir du panneau photovoltaïque 25 à travers le premier transistor 41.

Ici, la première broche 49 du premier transistor 41 est reliée électriquement au panneau photovoltaïque 25 au travers de la première diode 48 et, éventuellement, de la résistance de shunt 53.

Ici, la deuxième broche 50 du premier transistor 41 est connectée électriquement à la borne positive « + » de la batterie 24.

Avantageusement, le premier dispositif de protection 33 comprend, en outre, un condensateur 54. Le condensateur 54 est relié électriquement, d'une part, à la première résistance 45 et, d'autre part, au point milieu 47 du pont diviseur de tension 44 et à la troisième broche 51 du premier transistor 41.

Ainsi, le condensateur 54 permet de s'affranchir de perturbations électriques provenant du panneau photovoltaïque 25 au niveau de la première broche 49 du premier transistor 41.

De cette manière, le fonctionnement du premier transistor 41 est indépendant de ces perturbations électriques provenant du panneau photovoltaïque 25.

Ici, le condensateur 54 est relié électriquement, d'une part, au panneau photovoltaïque 25 et, plus particulièrement, à la résistance de shunt 53, en l'occurrence à sa borne 53b, et, d'autre part, à la première broche 49 du premier transistor 41.

Avantageusement, l'unité électronique de contrôle 15 comprend, en outre, une unité de pilotage 56. En outre, l'unité de pilotage 56 est reliée électriquement au moteur électrique 16.

Ainsi, l'unité de pilotage 56 est configurée pour alimenter en énergie électrique, autrement dit alimente en énergie électrique, le moteur électrique 16.

Ici, la batterie 24 fournit la tension V_{bat} à l'unité de pilotage 56.

Avantageusement, l'unité électronique de contrôle 15 et, plus particulièrement, la carte électronique 55 de l'unité électronique de contrôle 15 comprend au moins la masse 52.

Avantageusement, l'unité électronique de contrôle 15 comprend, en outre, un deuxième dispositif de protection 59. En outre, le deuxième dispositif de protection 59 est configuré pour déconnecter électriquement, autrement dit déconnecte électriquement, de façon sélective, la batterie 24 par rapport à l'unité de pilotage 56.

Ainsi, le deuxième dispositif de protection 59 protège, autrement dit est configuré pour protéger, l'unité de pilotage 56 contre une inversion de branchement des polarités de la batterie 24, lors du raccordement électrique de la batterie 24 à l'unité de pilotage 56.

Avantageusement, le deuxième dispositif de protection 59 comprend un deuxième transistor 60 et un troisième transistor 61. Le deuxième transistor 60 est relié électriquement au troisième transistor 61.

Le microcontrôleur 31 comprend un port de sortie 42. Le port de sortie 42 du microcontrôleur 31 est relié électriquement au troisième transistor 61. Le deuxième transistor 60 est commandé par le microcontrôleur 31 par l'intermédiaire du troisième transistor 61. En outre, le deuxième transistor 60 est configuré pour protéger, autrement dit protège, l'unité de pilotage 56 contre une inversion de branchement des polarités de la batterie 24, lors du raccordement électrique de la batterie 24 à l'unité électronique de contrôle 15.

Ainsi, le deuxième dispositif de protection 59 permet de protéger l'unité de pilotage 56 contre une inversion de branchement des polarités de la batterie 24, lors du raccordement électrique de la batterie 24 à l'unité électronique de contrôle 15.

Avantageusement, le deuxième transistor 60 comprend une deuxième diode inverse 62.

Lorsque le moteur électrique 16 est à l'arrêt, l'unité de pilotage 56 est alimentée en énergie électrique à partir de la batterie 24 à travers la deuxième diode inverse 62 du deuxième transistor 60, alors que le deuxième transistor 60 est dans un état ouvert.

Ici, la deuxième diode inverse 62 est intégrée au deuxième transistor 60.

Lorsque le moteur électrique 16 est mis en fonctionnement, la deuxième diode inverse 62 du deuxième transistor 60 est mise en court-circuit par une fermeture du deuxième transistor 60 et l'unité de pilotage 56 est alimentée en énergie électrique à partir de la batterie 24 à travers le deuxième transistor 60.

Ainsi, la mise en court-circuit de la deuxième diode inverse 62 du deuxième transistor 60 permet de réduire des pertes électriques et une chute de tension au niveau du deuxième dispositif de protection 59, par rapport au cas où l'alimentation en énergie électrique du moteur électrique 16 à partir de la batterie 24 serait mise en œuvre au travers d'une diode inverse, semblable à la deuxième diode inverse 62 en l'absence du deuxième transistor 60 dans le deuxième dispositif de protection 59.

Ici, le deuxième transistor 60 est relié électriquement à la liaison électrique L24-25 entre le panneau photovoltaïque 25 et la batterie 24.

Ici, le deuxième transistor 60 est relié électriquement, d'une part, au premier transistor 41 et, d'autre part, à la batterie 24. En outre, le deuxième transistor 60 est relié électriquement à l'unité de pilotage 56.

Ici, le deuxième transistor 60 est un transistor à effet de champ, en particulier de type MOSFET (acronyme de l'expression anglo-saxonne « Metal Oxyde Semiconductor Field Effect Transistor »).

En variante, non représentée, le deuxième transistor 60 peut être un transistor de type IGBT (acronyme de l'expression anglo-saxonne « Insulated Gâte Bipolar Transistor »).

Ici, le troisième transistor 61 est un transistor bipolaire, en particulier de type NPN (acronyme de l'expression Négatif-Positif-Négatif).

En variante, non représentée, le troisième transistor 61 peut être un transistor bipolaire de type PNP (acronyme de l'expression Positif-Négatif-Positif).

Avantageusement, le deuxième dispositif de protection 59 comprend, en outre, une troisième résistance 65, une quatrième résistance 66 et une cinquième résistance 67.

Avantageusement, le deuxième transistor 60 comprend :
- une première broche 68, pouvant également être appelée « source », la première broche 68 étant reliée électriquement à la batterie 24,
- une deuxième broche 69, pouvant également être appelée « drain », la deuxième broche 69 étant reliée électriquement à l'unité de pilotage 56, et
- une troisième broche 70, pouvant également être appelée « grille », la troisième broche 70 étant reliée électriquement au troisième transistor 61.

Avantageusement, le troisième transistor 61 comprend :
- une première broche 71, pouvant également être appelée « base », la première broche 71 étant reliée électriquement au port de sortie 42 du microcontrôleur 31,
- une deuxième broche 72, pouvant également être appelée « collecteur », la deuxième broche 72 étant reliée électriquement au deuxième transistor 60, en particulier à la deuxième broche 69 du deuxième transistor 60, et
- une troisième broche 73, pouvant également être appelée « émetteur », la troisième broche 51 étant reliée électriquement à la masse 52.

Avantageusement, la troisième résistance 65 est reliée électriquement, d'une part, à la deuxième broche 69 du deuxième transistor 60 et à l'unité de pilotage 56 et, d'autre part, à la troisième broche 70 du deuxième transistor 60 et à la deuxième broche 72 du troisième transistor 61.

Ainsi, la troisième résistance 65 limite, autrement dit est configurée pour limiter, une valeur d'un courant sortant de la deuxième broche 69 du deuxième transistor 60 et entrant dans la deuxième broche 72 du troisième transistor 61, lorsque le troisième transistor 61 est dans un état fermé.

Avantageusement, la quatrième résistance 66 est reliée électriquement, d'une part, à la première broche 71 du troisième transistor 61 et à la cinquième résistance 67 et, d'autre part, au port de sortie 42 du microcontrôleur 31.

Ainsi, la quatrième résistance 66 permet de définir une valeur seuil de courant dans la première broche 71 du troisième transistor 61, de sorte à régler un seuil de commutation entre un état ouvert et un état fermé du troisième transistor 61.

Avantageusement, la cinquième résistance 67 est reliée électriquement, d'une part, à la première broche 71 du troisième transistor 61 et à la quatrième résistance 66 et, d'autre part, à la masse 52 et à la troisième broche 73 du troisième transistor 61.

Ainsi, la cinquième résistance 67 permet de garantir que le potentiel de la première broche 71 du troisième transistor 61 est à une valeur de référence prédéterminée, en particulier de 0 volt, lorsque le troisième transistor 61 est dans un état fermé.

Avantageusement, le dispositif d'alimentation en énergie électrique 26 et, plus particulièrement, l'unité électronique de contrôle 15 comprend, en outre, une unité d'alimentation en énergie électrique auxiliaire 63.

Ainsi, l'unité d'alimentation en énergie électrique auxiliaire 63 est configurée pour alimenter en énergie électrique, autrement dit alimente en énergie électrique, l'unité électronique de contrôle 15, et plus particulièrement, le microcontrôleur 31 et le premier module de communication 27, ainsi que l'unité de pilotage 56.

Ici, l'unité d'alimentation en énergie électrique auxiliaire 63 est un convertisseur d'énergie électrique d'une première valeur de courant continu à une deuxième valeur de courant continu. La première valeur de courant continu est une tension d'entrée, correspondant à la tension d'alimentation V_{bat} fournie par la batterie 24. En outre, la deuxième valeur de courant continu est une tension de sortie, correspondant à une tension V_{dd} fournie à l'unité électronique de contrôle 15, et plus particulièrement, au microcontrôleur 31 et au premier module de communication 27.

A titre d'exemple nullement limitatif, la première valeur de courant continu est une tension pouvant être comprise entre 8 volts et 21 volts. En outre, la deuxième valeur de courant continu est une tension pouvant être de 3,3 volts, dite « stable ».

Ici, la deuxième valeur de courant continu, appelée la tension V_{dd}, est également fournie à l'amplificateur 57.

Avantageusement, le dispositif d'alimentation en énergie électrique 26 et, plus particulièrement, l'unité électronique de contrôle 15 comprend, en outre, une deuxième diode 64. La deuxième diode 64 est reliée électriquement à l'unité d'alimentation en énergie électrique auxiliaire 63. La deuxième diode 64 est dite « passante » de la batterie 24 vers l'unité d'alimentation en énergie électrique auxiliaire 63 et dite « bloquante » de l'unité d'alimentation en énergie électrique auxiliaire 63 vers la batterie 24.

En outre, la deuxième diode 64 est configurée pour protéger, autrement dit protège, l'unité d'alimentation en énergie électrique auxiliaire 63 contre une inversion de branchement des polarités de la batterie 24, lors du raccordement électrique de la batterie 24 à l'unité électronique de contrôle 15.

Ici, la deuxième diode 64 est reliée électriquement à la liaison électrique L24-25 entre le panneau photovoltaïque 25 et la batterie 24.

Ici, la deuxième diode 64 est reliée électriquement, d'une part, au premier transistor 41 et, d'autre part, à la batterie 24.

Ici, la deuxième diode 64 est reliée électriquement au deuxième dispositif de protection 59.

Avantageusement, la deuxième résistance 46 du pont diviseur de tension 44 est reliée électriquement à la masse 52.

Par ailleurs, le panneau photovoltaïque 25, la batterie 24, le moteur électrique 16, le troisième transistor 61 du deuxième dispositif de protection 59, l'amplificateur 57 du dispositif de mesure 37, le microcontrôleur 31 et le premier module de communication 27 sont chacun reliés à une masse et, plus particulièrement, à la masse 52 de l'unité électronique de contrôle 15.

Avantageusement, le dispositif d'alimentation en énergie électrique 26 comprend, en outre, un mécanisme de détrompage, non représenté. Dans ce cas, le mécanisme de détrompage est disposé au niveau d'une liaison électrique entre la batterie 24 et l'unité électronique de contrôle 15.

Ainsi, le mécanisme de détrompage permet d'empêcher une inversion de branchement des polarités de la batterie 24, lors du raccordement électrique de la batterie 24 à l'unité électronique de contrôle 15.

Ici, ce mécanisme de détrompage est intégré au niveau d'une prise électrique, non représentée, du câble d'alimentation électrique 18, reliant électriquement le dispositif d'alimentation en énergie électrique 26 et, plus particulièrement, la batterie 24 à l'unité électronique de contrôle 15. Par exemple, ce mécanisme de détrompage est réalisé par la forme de fiches électriques de la prise électrique du câble d'alimentation électrique 18.

On décrit à présent un mode d'exécution d'un procédé de commande en fonctionnement du dispositif d'entraînement motorisé 5, illustré aux figures 1 à 3, conforme à l'invention.

Le procédé de commande comprend au moins les étapes suivantes, de préférence exécutées dans l'ordre mentionné ci-dessous :
- raccordement électrique de la batterie 24 à l'unité électronique de contrôle 15, par exemple au moyen du câble d'alimentation électrique 18,
- raccordement électrique du panneau photovoltaïque 25 à la batterie 24, par exemple au moyen du câble d'alimentation électrique 18, et
- commande du premier transistor 41 par le pont diviseur de tension 44, à partir de la tension Vₚᵥ fournie par le panneau photovoltaïque 25, de sorte à protéger l'unité électronique de contrôle 15, au moyen du premier dispositif de protection 33, contre une inversion de branchement des polarités de la batterie 24, lors de l'étape de raccordement électrique de la batterie 24 à l'unité électronique de contrôle 15.

Grâce à la présente invention, le premier dispositif de protection permet de protéger au moins une partie de l'unité électronique de contrôle, en particulier un ou plusieurs composants électroniques d'une carte électronique, contre une inversion de branchement des polarités de la batterie, lors du raccordement électrique de la batterie à l'unité électronique de contrôle, tout en minimisant les coûts d'obtention du dispositif d'entraînement motorisé.

De nombreuses modifications peuvent être apportées aux exemples de réalisation décrits précédemment, sans sortir du cadre de l'invention défini par les revendications.

En variante, non représentée, le dispositif d'alimentation en énergie électrique 26 comprend, en outre, un chargeur. Ce chargeur est configuré pour être branché, autrement dit est branché, sur une prise électrique murale, de sorte à recharger la batterie 24 à partir d'un réseau d'alimentation électrique du secteur. Ce chargeur forme une source d'alimentation en énergie électrique externe.

En variante, non représentée, le dispositif d'alimentation en énergie électrique 26 comprend, en outre, une batterie auxiliaire, la batterie auxiliaire étant configurée pour recharger la batterie 24. Ainsi, la batterie 24 peut être rechargée au moyen de la batterie auxiliaire formant une source d'alimentation en énergie électrique externe, en particulier dans le cas où le dispositif d'occultation 3 est éloigné d'une prise électrique murale. En outre, la batterie auxiliaire peut permettre de recharger une batterie d'autres équipements électriques, notamment nomades, tels que, par exemple, un téléphone portable ou un ordinateur portable. Par ailleurs, une telle batterie auxiliaire, peut présenter au moins deux sorties électriques, en particulier une première sortie délivrant une tension de 12 volts pour alimenter en énergie électrique la batterie 24 et une deuxième sortie délivrant une tension de 5 volts pour alimenter en énergie électrique d'autres équipements électriques, dits nomades.

En variante, non représentée, l'actionneur électromécanique 11 est inséré dans un rail, en particulier de section carrée ou rectangulaire, pouvant être ouvert à l'une ou à ses deux extrémités, en particulier dans la configuration assemblée du dispositif d'occultation 3. Par ailleurs, l'actionneur électromécanique 11 peut être configuré pour entraîner un arbre d'entraînement sur lequel s'enroule des cordons de déplacement et/ou d'orientation de l'écran 2, qui peut, avantageusement, être un store à lames dans ce cas.

En outre, les modes de réalisation et variantes envisagés peuvent être combinés pour générer de nouveaux modes de réalisation de l'invention, sans sortir du cadre de l'invention défini par les revendications.

## Revendications

1. Dispositif d'entraînement motorisé (5) comprenant au moins :
- un actionneur électromécanique (11),
- une unité électronique de contrôle (15), et
- un dispositif d'alimentation en énergie électrique (26),
l'actionneur électromécanique (11) comprenant au moins un moteur électrique (16),
le dispositif d'alimentation en énergie électrique (26) comprenant au moins :
- une batterie (24), l'unité électronique de contrôle (15) et le moteur électrique (16) étant alimentés en énergie électrique à partir de la batterie (24), et
- un panneau photovoltaïque (25), la batterie (24) étant alimentée en énergie électrique au moyen du panneau photovoltaïque (25),
l'unité électronique de contrôle (15) comprenant au moins :
- un premier dispositif de protection (33), le premier dispositif de protection (33) étant configuré pour déconnecter électriquement, de façon sélective, la batterie (24) par rapport au panneau photovoltaïque (25), le premier dispositif de protection (33) comprenant un premier transistor (41), le premier transistor (41) étant relié électriquement, d'une part, au panneau photovoltaïque (25) et, d'autre part, à la batterie (24),
**caractérisé**
**en ce que** le premier transistor (41) est autopiloté,
**en ce que** le premier dispositif de protection (33) comprend, en outre, un pont diviseur de tension (44), le premier transistor (41) étant commandé par le pont diviseur de tension (44), à partir d'une tension (Vₚᵥ) fournie par le panneau photovoltaïque (25), et en ce que le premier dispositif de protection (33) protège au moins une partie de l'unité électronique de contrôle (15) contre une inversion de branchement des polarités de la batterie (24), lors du raccordement électrique de la batterie (24) à l'unité électronique de contrôle (15).

2. Dispositif d'entraînement motorisé (5) selon la revendication 1, **caractérisé**
**en ce que** l'unité électronique de contrôle (15) comprend, en outre, une première diode (48), la première diode (48) est reliée électriquement, d'une part, au panneau photovoltaïque (25) et, d'autre part, à la batterie (24),
**en ce que** le pont diviseur de tension (44) est relié électriquement, d'une part, à une liaison électrique (L24-25) entre le panneau photovoltaïque (25) et la batterie (24) et, d'autre part, à une masse (52), en parallèle au panneau photovoltaïque (25) et à la batterie (24),
et **en ce que** le premier transistor (41) est connecté électriquement à la première diode (48) et à la batterie (24).

3. Dispositif d'entraînement motorisé (5) selon la revendication 2, **caractérisé**
**en ce que** l'unité électronique de contrôle (15) comprend au moins un microcontrôleur (31),
**en ce que** le microcontrôleur (31) comprend au moins un port d'entrée (38),
**en ce que** l'unité électronique de contrôle (15) comprend, en outre, un dispositif de mesure (37),
et **en ce que** le dispositif de mesure (37) comprend au moins :
- une résistance de shunt (53), la résistance de shunt (53) étant connectée électriquement, d'une part, à la première diode (48) et, d'autre part, au premier transistor (41), et
- un amplificateur (57), l'amplificateur (57) étant connecté électriquement, d'une part, aux bornes (53a, 53b) de la résistance de shunt (53) et, d'autre part, au port d'entrée (38) du microcontrôleur (31).

4. Dispositif d'entraînement motorisé (5) selon l'une quelconque des revendications 1 à 3, **caractérisé**
**en ce que** le premier transistor (41) comprend :
- une première broche (49), la première broche (49) étant reliée électriquement au panneau photovoltaïque (25),
- une deuxième broche (50), la deuxième broche (50) étant reliée électriquement à la batterie (24), et
- une troisième broche (51), la troisième broche (51) étant reliée électriquement à un point milieu (47) du pont diviseur de tension (44).

5. Dispositif d'entraînement motorisé (5) selon l'une quelconque des revendications 1 à 4, **caractérisé**
**en ce que** l'unité électronique de contrôle (15) comprend, en outre :
- une unité de pilotage (56), et
- un deuxième dispositif de protection (59),
**en ce que** l'unité de pilotage (56) est reliée électriquement au moteur électrique (16),
et **en ce que** le deuxième dispositif de protection (59) est configuré pour déconnecter électriquement, de façon sélective, la batterie (24) par rapport à l'unité de pilotage (56).

6. Dispositif d'entraînement motorisé (5) selon la revendication 5, **caractérisé**
**en ce que** le deuxième dispositif de protection (59) comprend un deuxième transistor (60) et un troisième transistor (61), le deuxième transistor (60) étant relié électriquement au troisième transistor (61),
**en ce que** le microcontrôleur (31) comprend un port de sortie (42), le port de sortie (42) du microcontrôleur (31) étant relié électriquement au troisième transistor (61), le deuxième transistor (60) étant commandé par le microcontrôleur (31) par l'intermédiaire du troisième transistor (61),
et **en ce que** le deuxième transistor (60) protège l'unité de pilotage (56) contre une inversion de branchement des polarités de la batterie (24), lors du raccordement électrique de la batterie (24) à l'unité électronique de contrôle (15).

7. Dispositif d'entraînement motorisé (5) selon l'une quelconque des revendications 1 à 6, **caractérisé**
**en ce que** l'unité électronique de contrôle (15) comprend, en outre :
- une unité d'alimentation en énergie électrique auxiliaire (63), et
- une deuxième diode (64), la deuxième diode (64) étant reliée électriquement à l'unité d'alimentation en énergie électrique auxiliaire (63),
et **en ce que** la deuxième diode (64) protège l'unité d'alimentation en énergie électrique auxiliaire (63) contre une inversion de branchement des polarités de la batterie (24), lors du raccordement électrique de la batterie (24) à l'unité électronique de contrôle (15).

8. Dispositif d'occultation (3) comprenant au moins :
- un écran (2), et
- un dispositif d'entraînement motorisé (5),
**caractérisé en ce que** le dispositif d'entraînement motorisé (5) est conforme à l'une quelconque des revendications 1 à 7, l'écran (2) étant configuré pour être entraîné en déplacement par l'actionneur électromécanique (11) du dispositif d'entraînement motorisé (5).

9. Dispositif d'occultation (3) selon la revendication 8, **caractérisé**
**en ce que** le dispositif d'occultation (3) comprend, en outre, un tube d'enroulement (4),
**en ce que** l'écran (2) est enroulable sur le tube d'enroulement (4),
et **en ce que** le tube d'enroulement (4) est agencé de sorte à être entraîné en rotation par l'actionneur électromécanique (11).

10. Procédé de commande en fonctionnement d'un dispositif d'entraînement motorisé (5), le dispositif d'entraînement motorisé (5) comprenant au moins :
- un actionneur électromécanique (11),
- une unité électronique de contrôle (15), et
- un dispositif d'alimentation en énergie électrique (26),
l'actionneur électromécanique (11) comprenant au moins un moteur électrique (16),
le dispositif d'alimentation en énergie électrique (26) comprenant au moins :
- une batterie (24), l'unité électronique de contrôle (15) et le moteur électrique (16) étant alimentés en énergie électrique à partir de la batterie (24), et
- un panneau photovoltaïque (25), la batterie (24) étant alimentée en énergie électrique au moyen du panneau photovoltaïque (25),
l'unité électronique de contrôle (15) comprenant au moins :
- un premier dispositif de protection (33), le premier dispositif de protection (33) étant configuré pour déconnecter électriquement, de façon sélective, la batterie (24) par rapport au panneau photovoltaïque (25), le premier dispositif de protection (33) comprenant un premier transistor (41), le premier transistor (41) étant relié électriquement, d'une part, au panneau photovoltaïque (25) et, d'autre part, à la batterie (24),
**caractérisé**
**en ce que** le premier transistor (41) est autopiloté,
**en ce que** le premier dispositif de protection (33) comprend, en outre, un pont diviseur de tension (44),
et **en ce que** le procédé comprend au moins les étapes suivantes :
- raccordement électrique de la batterie (24) à l'unité électronique de contrôle (15),
- raccordement électrique du panneau photovoltaïque (25) à la batterie (24), et
- commande du premier transistor (41) par le pont diviseur de tension (44), à partir d'une tension (Vₚᵥ) fournie par le panneau photovoltaïque (25), de sorte à protéger l'unité électronique de contrôle (15), au moyen du premier dispositif de protection (33), contre une inversion de branchement des polarités de la batterie (24), lors de l'étape de raccordement électrique de la batterie (24) à l'unité électronique de contrôle (15).
